# EUROPEAN PATENT APPLICATION

(11) **EP 3 556 217 A1**
(43) Date of publication of application: **23.10.2019**
(21) Application number: 17880914.1
(22) Date of filing: 29.11.2017
(51) Int. Cl.: A23L 2/00

(54) **UNFERMENTED BEER-LIKE FOAMING BEVERAGE AND METHOD FOR MANUFACTURING SAME**

(30) Priority: 15.12.2016 JP 2016243662
(71) Applicant: Asahi Breweries, Ltd., Tokyo 130-8602 (JP); Asahi Group Holdings, Ltd., Tokyo 130-8602 (JP)
(72) Inventor: NODA Akihiko, Moriya-shi Ibaraki 302-0106 (JP); ITO Shinsuke, Moriya-shi Ibaraki 302-0106 (JP)
(74) Representative: Cabinet Becker et Associés
(86) International application number: PCT/JP2017/042764
(87) International publication number: WO 2018/110278

(57) **Abstract**

A non-fermented beer-like effervescent beverage according to the present invention is characterized by containing a steviol glycoside and 0.01 to 0.03 g/L of an iso-a acid, and a digestible-carbohydrate content is less than 2.0 g / 100 mL, or a content of steviol glycoside is from 0.01 to 0.08 g/L. A method for producing a non-fermented beer-like effervescent beverage according to the present invention is characterized by using a steviol glycoside as a raw material and adjusting an iso-a acid content in the beverage to 0.01 to 0.03 g/L.

## Description

### TECHNICAL FIELD

The present invention relates to a non-fermented beer-like effervescent beverage having both a satisfactory body and tightness of aftertaste with a reduced digestible-carbohydrate content and a method for producing the same.

Priority is claimed on Japanese Patent Application No. 2016-243662, filed December 15, 2016, the content of which is incorporated herein by reference.

### BACKGROUND ART

With regard to beer-like effervescent beverages such as beer and low-malt beer, a wide variety of products have been made commercially available along with diversification of consumer preferences. In particular, the demand for low calorie, low digestible-carbohydrate beer-like effervescent beverages is increasing due to the health consciousness of consumers in recent years. For example, although beer is a well-balanced thirst-quenching beverage that has a tight aftertaste while having a body due to various components that have not been fully analyzed yet, including alcohols produced by yeast fermentation, its calories and digestible-carbohydrate content are high. On the other hand, a non-fermented beer-like effervescent beverage produced without undergoing a fermentation process tends to have a simpler component composition and a weaker body than those of a fermented beer-like effervescent beverage, although the control of calories and ddigestible-carbohydrate content is easy. Therefore, for example, by using a lower-digestible-carbohydrate, lower-calorie raw material, such as a sweetener with high sweetness, instead of sucrose, it is possible to produce a low digestible-carbohydrate, low calorie, non-fermented beer-like effervescent beverage relatively easily.

Examples of the sweeteners with high sweetness include artificial sweeteners such as aspartame, sucralose, acesulfame potassium and saccharin, and natural sweeteners such as a stevia extract, a licorice extract, a luo han guo extract, thaumatin and erythritol. Although artificial sweeteners such as aspartame are widely used in beverages since their sweetness qualities are closer to those of sucrose, in recent years, artificial sweeteners tend to be avoided in view of customer concerns for food safety and security.

In addition, many sweeteners with high sweetness have different sweetness qualities from those of sucrose, such as a strong lingering sweet taste and provision of a bitter taste or astringent taste. Accordingly, several methods are known to improve the sweetness qualities of sweeteners with high sweetness. For example, Patent Document 1 describes that the addition of a sourness imparting substance and a bitterness imparting substance to a beverage containing acesulfame potassium and sucralose can improve the lingering sweet taste of acesulfame potassium and the like. In addition, Patent Documents 2 and 3 describe that the addition of mogroside V, gentiooligosaccharides, highly branched dextrins or the like to a stevia extract can improve the lingering sweet taste and bitter taste of stevia extract and bring it close to the sweetness of sucrose.

On the other hand, the characteristic bitter taste specific to beer, which is the main factor that makes beer-like effervescent beverages excellent thirst-quenching beverages, is mainly due to the iso-a acid which is a bitter taste component derived from hops. The greater the amount of iso-a acid, the stronger the bitter taste, but the bitter taste lingers, and the sharpness becomes poor. In order to produce a beer-like effervescent beverage also having satisfactory sharpness while having a sufficient bitter taste, for example, Patent Document 4 describes that the bitter taste can be enhanced without impairing the sharpness by adjusting the content ratio of isocohumulone with respect to the total amount of iso-a acid in the beverage within a certain range.

### DOCUMENTS OF RELATED ART

### Patent Documents

[Patent Document 1] Japanese Unexamined Patent Application, First Publication No. 2016-127855
[Patent Document 2] Japanese Unexamined Patent Application, First Publication No. 2016-178928
[Patent Document 3] Japanese Unexamined Patent Application, First Publication No. 2013-135687
[Patent Document 4] Japanese Unexamined Patent Application, First Publication No. 2015-107073

### SUMMARY OF INVENTION

### PROBLEMS TO BE SOLVED BY THE INVENTION

An object of the present invention is to provide a non-fermented beer-like effervescent beverage having both a satisfactory body and tightness of aftertaste with a reduced digestible-carbohydrate content by using a natural sweetener with high sweetness, and a method for producing the same.

### MEANS TO SOLVE THE PROBLEMS

As a result of intensive research aimed at solving the above problems, the inventors of the present invention found that a non-fermented beer-like effervescent beverage having a beer-like body and satisfactory tightness of aftertaste can be obtained while suppressing the digestible-carbohydrate content by using a stevia extract or its enzyme-treated product as a natural sweetener with high sweetness and adjusting the content of iso-a acid within a specific range, thereby completing the present invention.

The non-fermented beer-like effervescent beverage and the method for producing a non-fermented beer-like effervescent beverage according to the present invention include the aspects [1] to [13] described below.
[1] A non-fermented beer-like effervescent beverage characterized by including a steviol glycoside and 0.01 to 0.03 g/L of an iso-a acid.
[2] The non-fermented beer-like effervescent beverage according to the above [1], wherein a digestible-carbohydrate content is less than 2.0 g / 100 mL.
[3] The non-fermented beer-like effervescent beverage according to the above [1], wherein a digestible-carbohydrate content is less than 0.9 g / 100 mL.
[4] The non-fermented beer-like effervescent beverage according to the above [1], wherein a digestible-carbohydrate content is less than 0.5 g / 100 mL.
[5] The non-fermented beer-like effervescent beverage according to the above [1] to [4], wherein a content of steviol glycoside is from 0.01 to 0.08 g/L.
[6] The non-fermented beer-like effervescent beverage according to the above [1] to [4], wherein a content of steviol glycoside is from 1 to 15 g/L in sucrose equivalent.
[7] The non-fermented beer-like effervescent beverage according to any one of the above [1] to [6], wherein a ratio of a content of isocohumulone with respect to a content of iso-a acid is 26% by mass or more, and a ratio of a content of iso-normal-humulone with respect to the content of iso-a acid is 63% by mass or less.
[8] The non-fermented beer-like effervescent beverage according to any one of the above [1] to [7], wherein the aforementioned steviol glycoside is at least one selected from the group consisting of stevioside, rebaudioside A, and glycosyltransferase-treated products thereof.
[9] The non-fermented beer-like effervescent beverage according to any one of the above [1] to [8], which does not contain an alcohol.
[10] The non-fermented beer-like effervescent beverage according to any one of the above [1] to [9], which contains a water-soluble dietary fiber.
[11] The non-fermented beer-like effervescent beverage according to any one of the above [1] to [10], wherein a purine concentration is 0.2 mg / 100 mL or less.
[12] A method for producing a non-fermented beer-like effervescent beverage characterized by using a steviol glycoside as a raw material and adjusting an iso-a acid content in the non-fermented beer-like effervescent beverage to 0.01 to 0.03 g/L.
[13] The method for producing a non-fermented beer-like effervescent beverage according to the above [12], wherein a ratio of a content of isocohumulone with respect to a content of iso-a acid in the non-fermented beer-like effervescent beverage is adjusted to be 26% by mass or more, and a ratio of a content of iso-normal-humulone with respect to the content of iso-a acid is adjusted to be 63% by mass or less.

### EFFECTS OF THE INVENTION

According to the present invention, it is possible to provide a non-fermented beer-like effervescent beverage having both a satisfactory body and tightness of aftertaste with a reduced digestible-carbohydrate content.

### EMBODIMENTS FOR CARRYING OUT THE INVENTION

A non-fermented beer-like effervescent beverage according to the present invention and the specification of the present application means an effervescent beverage having a beer-like taste (taste reminiscent of beer in terms of flavor) produced without undergoing a fermentation process. The alcohol concentration of the non-fermented beer-like effervescent beverage in the present invention is not limited, and may be an alcoholic beverage of 0.5% by volume or more, or a so-called non-alcoholic beverage of less than 0.5% by volume. Specific examples of non-fermented beer-like effervescent beverages include a low-malt beer and a non-alcoholic beer.

The non-fermented beer-like effervescent beverage according to the present invention is characterized by containing a steviol glycoside as a sweetener and 0.01 to 0.03 g/L of iso-a acid. Steviol glycosides (glycosides provided with a steviol skeleton) are natural sweeteners with high sweetness derived from the leaves of stevia (Stevia rebaudiana BERTONI). The non-fermented beer-like effervescent beverage according to the present invention is in line with the preferences of consumers who avoid artificial sweeteners by using a steviol glycoside which is a natural sweetener with high sweetness as the main sweetener. Further, the non-fermented beer-like effervescent beverage according to the present invention is a beer-like, well-balanced, thirst-quenching beverage having satisfactory tightness of aftertaste, since the content of iso-a acid is further adjusted within a specific range. In the non-fermented beer-like effervescent beverage according to the present invention, the reason why the tightness of aftertaste is satisfactory is not clear. However, it is inferred that the aftertaste of the steviol glycoside itself is a thick taste including a sweet taste and a characteristic astringent taste, and by blending an iso-a acid with this thick aftertaste in an optimal balance, the balance between the thick aftertaste of the steviol glycoside, in particular, the astringent taste characteristic of steviol glycosides and the bitter taste brought about by the iso-a acid is optimized. As a result, a beer-like body and the tightness of aftertaste will be brought about. The astringent taste remaining in the aftertaste of steviol glycosides is one that is avoided as a sweetener as a substitute for sucrose, but the thick aftertaste including this astringent taste is effective for a beer-like body and a tight aftertaste.

The steviol glycoside contained in the non-fermented beer-like effervescent beverage according to the present invention is not particularly limited as long as it is a sweet taste component having a steviol skeleton, and may be a natural steviol glycoside itself contained in stevia leaves, or it may be a steviol glycoside obtained by transglycosylation of glucose or fructose to a natural steviol glycoside by a glycosyltransferase. Examples of steviol glycosides include stevioside, rebaudioside A, rebaudioside C, and dulcoside A. The steviol glycoside contained in the non-fermented beer-like effervescent beverage according to the present invention may be one type or two or more types.

A non-fermented beer-like effervescent beverage containing a steviol glycoside can be produced, for example, by using a stevia extract containing a steviol glycoside, a stevia powder, or a steviol glycoside purified therefrom as a raw material. The stevia extract includes not only the extract itself which is extracted from stevia leaves with a suitable extraction solvent, but also the crude purified products and the products of the extract. Further, the non-fermented beer-like effervescent beverage according to the present invention can also be produced by using a stevia extract, a stevia powder, or those obtained by treating steviol glycosides purified therefrom with a glycosyltransferase (hereinafter sometimes referred to as "enzyme-treated stevia") as a raw material.

The steviol glycoside contained in the non-fermented beer-like effervescent beverage according to the present invention preferably contain at least one selected from the group consisting of stevioside, rebaudioside A, and their glycosyltransferase-treated products, and in particular, it is more preferable to contain stevioside.

The content of steviol glycoside in the non-fermented beer-like effervescent beverage can be determined, for example, from the peak area of the chromatogram obtained by HPLC (high performance liquid chromatography) analysis. The quantitative method from the peak area may be the area percentage method, or may be obtained from the ratio to the peak area of a reference standard with a known concentration.

The content of the steviol glycoside in the non-fermented beer-like effervescent beverage according to the present invention is not particularly limited as long as it can impart a sufficient body and also improves the tightness of aftertaste, and it can be appropriately determined in consideration of the content of iso-a acid, the desired product quality, and the like.

The content of the steviol glycoside in the non-fermented beer-like effervescent beverage according to the present invention is preferably from 0.01 to 0.08 g/L, more preferably from 0.02 to 0.08 g/L, still more preferably from 0.02 to 0.05 g/L, and even more preferably from 0.02 to 0.04 g/L.

The content of the steviol glycoside in the non-fermented beer-like effervescent beverage according to the present invention can also be determined based on the content calculated in sucrose equivalent. For example, the content of the steviol glycoside is preferably such that the content of the beverage calculated in sucrose equivalent is from 1 to 15 g/L, more preferably from 2.5 to 12 g/L, and still more preferably from 3 to 8 g/L.

It should be noted that the "content of the sweetener with high sweetness calculated in sucrose equivalent" means an amount obtained by multiplying the content of the sweetener with high sweetness and the degree of sweetness. For example, when the content of the enzyme-treated stevia having a degree of sweetness of 180 is 0.028 g/L, the content calculated in sucrose equivalent is 5 g/L.

The non-fermented beer-like effervescent beverage according to the present invention contains an iso-a acid as a bitter taste component. In the present invention and the specification of the present application, iso-a acid is a generic term for isocohumulone, iso-normal-humulone (iso-n-humulone) and isoadhumulone, and the content of iso-a acid in a non-fermented beer-like effervescent beverage is the total content of isocohumulone, iso-normal-humulone, and isoadhumulone in the non-fermented beer-like effervescent beverage.

The content of iso-a acid in the non-fermented beer-like effervescent beverage according to the present invention is from 0.01 to 0.03 g/L. By setting the content of iso-a acid in the above range, it is possible to achieve a beer-like bitter taste and a tight aftertaste. The content of iso-a acid in the non-fermented beer-like effervescent beverage according to the present invention is preferably from 0.010 to 0.025 g/L, more preferably from 0.015 to 0.025 g/L, and still more preferably from 0.02 to 0.025 g/L.

The higher the ratio of the content of isocohumulone with respect to the content of iso-a acid in the non-fermented beer-like effervescent beverage according to the present invention, the better the tightness of aftertaste obtained when used in combination with the steviol glycoside. Further, the lower the ratio of the content of iso-normal-humulone with respect to the content of iso-a acid in the non-fermented beer-like effervescent beverage according to the present invention, the better the tightness of aftertaste obtained when used in combination with the steviol glycoside. When a purified product of each iso-a acid is used as the iso-a acid in the non-fermented beer-like effervescent beverage according to the present invention, it is preferable to use isocohumulone as the iso-a acid in the non-fermented beer-like effervescent beverage according to the present invention. When a mixture of three iso-a acids such as a hop or a hop extract is used as the iso-a acid in the non-fermented beer-like effervescent beverage according to the present invention, the ratio of the content of isocohumulone with respect to the content of iso-a acid in the non-fermented beer-like effervescent beverage according to the present invention (hereinafter sometimes referred to as "isocohumulone ratio") is preferably 26% by mass or more, more preferably from 26 to 50% by mass, and still more preferably from 26 to 38% by mass. On the other hand, the ratio of the content of iso-normal-humulone with respect to the content of iso-a acid (hereinafter sometimes referred to as "iso-normal-humulone ratio") is preferably 63% by mass or less, more preferably 57% by mass or less, still more preferably from 40 to 57% by mass, and even more preferably from 50 to 57% by mass.

A non-fermented beer-like effervescent beverage containing 0.01 to 0.03 g/L of iso-a acid can be produced by conducting a boiling treatment using, for example, a raw material containing an α-acid such as a hop, a hop extract or a hop pellet. The α-acid derived from hops or the like is isomerized by the boiling treatment to produce a beverage containing an iso-a acid. In addition, a non-fermented beer-like effervescent beverage containing an iso-a acid can also be produced by using, as a raw material, a purified iso-a acid itself or an isomerized hop extract obtained by subjecting a hop extract to an isomerization treatment in advance.

As hops that can be used as raw materials to produce the non-fermented beer-like effervescent beverage according to the present invention, varieties of Saaz, Spalter Select, Perle, Northern Brewer, Hersbrucker, Hallertau Mittelfruh, Hallertau Tradition, Tettnanger, Nugget, Galena, Willamette, Cascade, Herkules, Motueka, Summit, Pacific Gem, Bullion, Brewers Gold, Chinook, Cluster, East Kent Golding, Fuggle, Hallertau, Mount Hood, Styrian, Saphir, Styrian Golding, Hallertauer Taurus, Magnum, Zeus and the like can be mentioned. In the non-fermented beer-like effervescent beverage according to the present invention, when using these hops, it is preferable to appropriately select the type of hops and to use a plurality of types of hops in combination as needed.

Examples of the hop extract which can be used as a raw material in the production of the non-fermented beer-like effervescent beverage according to the present invention include a hop extract obtained by using water, ethanol, carbon dioxide or the like as an extraction solvent.

These hop extracts can be produced by a conventional method.

In the present invention, a specific method of adjusting the ratio of isocohumulone to the total amount of iso-a acid is not particularly limited. However, for example, it may be a method of measuring the contents of isocohumulone and the other iso-a acids for each hop variety, selecting various hops and using the hops in combination so that the ratio of isocohumulone to the total amount of iso-a acid becomes the above ratio, or the ratio of isocohumulone to the total amount of iso-a acid may be adjusted by adding a preparation obtained by purifying or crudely purifying isocohumulone, iso-normal-humulone, or isoadhumulone in addition to a conventional hop, hop pellet or hop extract to a non-fermented beer-like effervescent beverage.

The content of iso-a acid in the non-fermented beer-like effervescent beverage can be determined, for example, from the peak area of the chromatogram obtained by HPLC analysis using a reversed phase column such as a C18 column. The quantitative method from the peak area may be the area percentage method, or may be obtained from the ratio to the peak area of a reference standard with a known concentration.

The non-fermented beer-like effervescent beverage according to the present invention can achieve a beer-like body without using sucrose by using a steviol glycoside as a sweetener. The digestible-carbohydrate concentration of the non-fermented beer-like effervescent beverage according to the present invention is preferably less than 2.0 g / 100 mL, more preferably less than 0.9 g / 100 mL, and still more preferably less than 0.5 g / 100 mL. The digestible-carbohydrate concentration of the non-fermented beer-like effervescent beverage according to the present invention can be achieved, for example, by using only those having a relatively low digestible-carbohydrate content as a raw material.

As the non-fermented beer-like effervescent beverage according to the present invention, it is preferable that the purine concentration be low, in order to be in line with the health consciousness of consumers. The purine concentration of the non-fermented beer-like effervescent beverage according to the present invention is preferably less than 0.2 mg / 100 mL, more preferably 0.1 mg / 100 mL or less, and still more preferably less than 0.08 mg / 100 mL. The lower limit value of the purine concentration of the non-fermented beer-like effervescent beverage according to the present invention is 0 mg / 100 mL.

It should be noted that in the present invention and the specification of the present application, purine refers to the total of four types of purine bases of adenine, xanthine, guanine and hypoxanthine. The purine content in non-fermented beer-like effervescent beverages and raw materials can be measured by a detection method using, for example, LC-MS / MS after hydrolysis with perchloric acid ("Guide to microanalysis of purines in alcoholic beverages"), Japan Food Research Laboratories, Internet <URL: http://www.jfrl.or.jp/item/nutrition/post-31.html> (searched in January 2013).

The non-fermented beer-like effervescent beverage according to the present invention preferably further contains an acidulant. By containing the acidulant, it is possible to obtain a non-fermented beer-like effervescent beverage which is excellent in the balance of flavor and has a more beer-like taste. The acidulant is not particularly limited as long as it can be blended in food and drink, and is appropriately determined together with the blending amount according to the quality characteristics required for the final product. The acidulant is not particularly limited as long as it is generally used to produce food and drink, and examples thereof include lactic acid, citric acid, gluconic acid, malic acid, tartaric acid, fumaric acid, succinic acid, adipic acid, fumaric acid, phosphoric acid, and salts thereof. One of these acidulants may be used alone or two or more of these may be used in combination.

When the non-fermented beer-like effervescent beverage according to the present invention contains an acid, it is preferable to adjust the amount of acid added such that the pH of the beverage is from 3.0 to 4.0. When the amount of acid added to the beverage is too large, sourness is emphasized, and it becomes difficult to drink. In the non-fermented beer-like effervescent beverage to be produced, the balance of the flavor can be further improved by controlling the amount of acid added so that the pH of the beverage is about 3.0 to 4.0.

The non-fermented beer-like effervescent beverage according to the present invention preferably further contains a water-soluble dietary fiber. A water-soluble dietary fiber means a carbohydrate soluble in water, which is not or hardly digested by human digestive enzymes. By containing the water-soluble dietary fiber, a non-fermented beer-like effervescent beverage with a better body is obtained. Examples of the water-soluble dietary fiber used in the present invention include indigestible dextrins, polydextroses, soybean dietary fibers, galactomannans, inulins, degraded guar gums, pectins and gum arabic.

One of these water-soluble dietary fibers may be used alone or two or more of these may be used in combination.

Among them, it is particularly preferable to contain indigestible dextrins, polydextroses, and soybean dietary fibers, because they have high physiological functions and favorable tastes.

Many beers are light yellow to dark brown or black transparent solutions. A color similar to that of beer can be imparted to the non-fermented beer-like effervescent beverage according to the present invention by further containing a pigment. The pigment is not particularly limited as long as it can impart a beer-like color and is a pigment that can be eaten and drunk, and a caramelization reaction product (caramel color) is particularly preferable.

When the non-fermented beer-like effervescent beverage according to the present invention contains a pigment, the content of the pigment is appropriately adjusted according to the type of the pigment used, the quality characteristics required for the final product, and the like. In the non-fermented beer-like effervescent beverage according to the present invention, the pigment is preferably added so that the chromaticity of the beverage is 2° EBC or more, more preferably 5° EBC or more, still more preferably 7° EBC or more, and even more preferably 7 to 16° EBC. It should be noted that the chromaticity can be measured by the Analytica-EBC standard method of the European Brewery Convention (EBC) or a method according thereto. EBC is the unit of chromaticity in the beer analysis, and the tint of beer color is expressed in numerical values (measured through visual observation using a comparator with nine glass discs of the EBC chromaticity, or calculated based on the absorbance at a wavelength of 430 nm).

The greatest feature of beer in terms of the appearance is that it foams in a beautiful white color when poured into a container. For this reason, the non-fermented beer-like effervescent beverage according to the present invention preferably further contains a foaming agent. Examples of the foaming agent include soybean dietary fibers, soybean peptides, soybean saponins, alginates and quillaja saponins. One of these foaming agents may be used alone, or two or more of these may be used in combination. The non-fermented beer-like effervescent beverage according to the present invention preferably contains at least one selected from the group consisting of soybean peptides, soybean dietary fibers, alginates and quillaja saponins, and more preferably contains at least one selected from the group consisting of soybean dietary fibers and quillaja saponins.

When the non-fermented beer-like effervescent beverage according to the present invention contains a foaming agent, the content of the foaming agent is appropriately adjusted according to the type and combination of the foaming agents used, the quality characteristics required for the final product, and the like. In the non-fermented beer-like effervescent beverage according to the present invention, a foaming agent is preferably added so that the NIBEM value of the beverage is 80 or more, more preferably 100 or more, and still more preferably 150 or more. It should be noted that the NIBEM value is a value obtained by measuring the disintegration rate of poured foam by the electrical conductivity, and is generally used to evaluate foam durability of beer and the like. The NIBEM value of the non-fermented beer-like effervescent beverage can be measured by the Analytica-EBC standard method of the European Brewery Convention (EBC) or a method according thereto.

The non-fermented beer-like effervescent beverage according to the present invention may be a non-alcoholic beverage, and preferably contains no alcohol, and the alcohol concentration with respect to the total volume of the non-fermented beer-like effervescent beverage is 0% by volume.

Alternatively, the non-fermented beer-like effervescent beverage according to the present invention may be an alcoholic beverage containing ethanol. When the non-fermented beer-like effervescent beverage according to the present invention contains ethanol, the ethanol concentration with respect to the total volume of the non-fermented beer-like effervescent beverage is preferably from 1 to 9% by volume, more preferably from 1 to 8% by volume, and still more preferably from 1 to 7% by volume. It should be noted that the non-fermented beer-like effervescent beverage containing ethanol can be produced by using an alcohol-containing distillate as a raw material. The alcohol-containing distillate is a solution containing an alcohol obtained by a distillation operation, and those that are generally classified into distilled spirits can be used. For example, alcohols that are generally used as raw materials in the production of alcoholic beverages, spirits, whiskeys, brandies, vodkas, rums, tequilas, gins, shochus, and the like can be used.

The non-fermented beer-like effervescent beverage according to the present invention can further contain other components as long as the effects of the present invention are not impaired. Examples of the other components include sweeteners other than steviol glycosides, bittering agents other than iso-a acids, protein-degradation products derived from yeasts or grains such as wheats, malt saccharification liquids, fruit juices, herbs, and essences.

Sweeteners other than steviol glycosides may be sugars, may be sweeteners having relatively low sweetness, or may be sweeteners with high degrees of sweetness. Specific examples of sweeteners having relatively low sweetness include polysaccharides and sweet taste amino acids. The term polysaccharide means a digestible-carbohydrate in which three or more monosaccharides are polymerized. Polysaccharides are broadly classified into starches, dextrins and oligosaccharides mainly according to their sizes. Oligosaccharides are digestible-carbohydrates obtained by polymerizing about 3 to 10 monosaccharides, and dextrins refer to digestible-carbohydrates obtained by hydrolyzing starches and which are larger than oligosaccharides. Examples of sweet taste amino acids include alanine and glycine, and alanine is preferred. As sweeteners with high degrees of sweetness, acesulfame potassium, neotame, aspartame, sucralose and the like can be mentioned. One of these sweeteners may be used alone or two or more of these may be used in combination.

The bittering agent other than iso-a acids is not particularly limited as long as it exhibits a bitter taste which is the same as or similar to that of beer in a non-fermented beer-like effervescent beverage as a product, and it may be a bitter component contained in a hop or may be a bitter component which is not contained in a hop. More specifically, representative examples of the bittering agents include bitterness imparting components such as magnesium salts, calcium salts, tributyl citrate, triethyl citrate, naringin, quassin, oxides of tetraiso-α acids or β acids, quinine, momordicin, quercitrin, theobromine and caffeine, and bitterness imparting materials such as bitter gourds, Japanese green gentian tea, Kuding tea, wormwood extracts, gentian extracts, cinchona extracts and the like. One of these bittering agents may be used alone, or two or more of these may be used in combination.

Examples of the essence include a beer flavor, a beer essence, a hop essence, a malt essence and a carbonic acid enhancer.

The non-fermented beer-like effervescent beverage according to the present invention can be produced in the same manner as the production of a general non-fermented beer-like effervescent beverage except that a steviol glycoside is used as a raw material and the content of iso-a acid in the beverage is adjusted to 0.01 to 0.03 g/L. For example, it can be produced by a production method which includes a preparation step in which a raw material containing a steviol glycoside and a raw material containing an iso-a acid are mixed to prepare a preparation liquid, and, a gas introduction step in which carbon dioxide gas is added to the preparation liquid obtained by the preparation step, or a water addition step in which carbonated water is added thereto. When a raw material containing an α acid such as a hop or a hop extract is used instead of the raw material containing an iso-a acid, it can be produced by a production method including a preparation step in which raw materials are mixed to prepare a preparation liquid, an isomerization step in which the preparation liquid obtained by the preparation step is subjected to a boiling treatment to isomerize the α acid, and, a gas introduction step in which carbon dioxide gas is added to the isomerized preparation liquid, or a water addition step in which carbonated water is added thereto, after the isomerization step. The boiling method and its conditions can be determined suitably. In addition, the timing of mixing the essences and pigments may be simultaneous with that of other raw materials, or may be after the gas introduction step or the water addition step.

First, in the preparation step, the preparation liquid is prepared by mixing the raw materials. In the preparation step, it is preferable to prepare a preparation liquid obtained by mixing all the raw materials other than carbon dioxide gas, essences and pigments. The order for mixing the respective raw materials is not particularly limited. All of the raw materials may be added simultaneously to the raw material water, or the raw materials may be added sequentially, for example, by adding the remaining raw materials after dissolving the previously added raw materials. In addition, for example, a solid (for example, powder or granular) raw material and an alcohol may be mixed with the raw material water, or the solid raw material may be made into an aqueous solution in advance, and the aqueous solution and the alcohol, and, if necessary, the raw material water may be mixed.

When insoluble matter is generated in the preparation liquid prepared in the preparation step, it is preferable to subject the preparation liquid to a treatment for removing the insoluble matter, such as filtration, in any one of these steps. In particular, in the case of carrying out the isomerization step, it is preferable to remove the insoluble matter from the preparation liquid after the isomerization treatment.

The insoluble matter removal treatment is not particularly limited, and can be carried out by a method commonly used in the relevant technical field such as a filtration method or a centrifugation method. In the present invention, the insoluble matter is preferably removed by filtration, and more preferably removed by diatomaceous earth filtration.

Subsequently, carbon dioxide gas is added to the preparation liquid obtained by the preparation step in a gas introduction step. As a result, a non-fermented beer-like effervescent beverage is obtained. By adding carbon dioxide gas, the same exhilarating feeling as that of beer is imparted. It should be noted that the addition of carbon dioxide gas can be performed by a conventional method. For example, the preparation liquid obtained by the preparation step may be mixed with carbonated water, or carbon dioxide gas may be directly added to and dissolved in the preparation liquid obtained by the preparation step.

After the addition of carbon dioxide gas, the obtained non-fermented beer-like effervescent beverage may be further subjected to a treatment for removing the insoluble matter, such as filtration. The insoluble matter removal treatment is not particularly limited, and can be carried out by a method commonly used in the relevant technical field.

The obtained non-fermented beer-like effervescent beverage is usually filled into a container such as a can, a bottle, a plastic bottle or the like by a filling step and shipped as a product.

### EXAMPLES

Next, the present invention will be described in more detail based on a series of examples and reference examples, although the present invention is in no way limited by the following examples.

### <Measurement of iso-a acid>

In the following examples, the concentration of iso-a acid in the beverage was determined by measuring bitterness units (B.U.) according to the Analytica-EBC standard method of the European Brewery Convention (EBC).

### <Measurement of iso-normal-humulone/ isocohumulone/ isoadhumulone>

In the following examples, the concentrations of iso-normal-humulone, isocohumulone, and isoadhumulone in the beverage were measured by fractionating the iso-a acid extract of the beverage by HPLC using a C18 column. The HPLC was performed under the following conditions.

### HPLC conditions:

Column: XBridge C18 Prep Column (250 m × 10 mm (ID)) (manufactured by Waters Corporation)
Mobile phase A: 1% by volume aqueous formic acid
Mobile phase B: 1% by volume methanol solution containing formic acid
Flow rate: 1.5 mL/min
Gradient conditions: mobile phase B concentration 68% by volume (0 minutes) → mobile phase B concentration 72% by volume (1 minute) → mobile phase B concentration 72% by volume (18 minutes) → mobile phase B concentration 100% by volume (18.1 minutes) → mobile phase B concentration 100% by volume (23 minutes) → mobile phase B concentration 68% by volume (23.1 minutes) → mobile phase B concentration 68% by volume (30 minutes)
Detection wavelength: 275 nm

### [Example 1-1, Comparative Examples 1-2 to 1-8]

Various sweet substances were added to a non-fermented beer-like effervescent beverage containing an iso-a acid, and the body and the tightness of aftertaste thereof were evaluated.

### <Production of non-fermented beer-like effervescent beverage>

A non-fermented beer-like effervescent beverage was produced by blending an iso-a acid and various sweet substances with respect to a base beverage obtained by blending an indigestible dextrin, a soybean dietary fiber, a caramel color, an acidulant (phosphoric acid, sodium citrate) and a beer essence with raw material water so that the final added amounts in the beverage were the added amounts listed in Table 1.

**[Table 1]**

| | [g/L] |
|---|---|
| Indigestible dextrin | 8.00 |
| Soybean dietary fiber | 2.00 |
| Caramel color | 0.30 |
| Phosphoric acid | 0.50 |
| Sodium citrate | 0.35 |
| Beer essence | 0.80 |

As sweet substances, enzyme-treated stevia (trade name: "SK Sweet FZ", main component: stevioside and its enzyme-treated product (content of steviol glycoside of 85% by mass or more with respect to the total mass of "SK Sweet FZ"), manufactured by Nippon Paper Chemicals Co., Ltd.), a licorice extract (trade name: "licorice extract pure Glycymin", manufactured by Maruzen Pharmaceuticals Co., Ltd.), a luo han guo extract (trade name: "FD luo han guo concentrated powder", manufactured by Ogawa & Co., Ltd.), thaumatin (trade name: "San Sweet", manufactured by San-Ei Gen F. F. 1., Inc.), glucose (trade name: "liquid glucose", manufactured by Nihon Shokuhin Kako Co., Ltd.), maltose (trade name: "MR70", manufactured by Showa Sangyo Co., Ltd.), and fructose glucose (trade name: "NF55", manufactured by Showa Sangyo Co., Ltd.) were each adjusted and blended so that the content of the beverage in sucrose equivalent was about 5 g/L.

In addition, a hop extract (product name: "CO₂ Hop Extract", manufactured by Barth-Haas Group) of the hop variety Herkules as a raw material was blended so that the content of iso-a acid of the beverage was 0.02 g/L after the boiling treatment.

More specifically, a preparation liquid (primary raw material liquid) obtained by blending all the raw materials with raw material water and adjusting the resultant to 1 L was prepared, and was boiled for 1 hour. After cooling the primary raw material liquid, water was added to compensate for evaporation, and diatomaceous earth filtration and filter filtration were carried out for clarification. Subsequently, a non-fermented beer-like effervescent beverage was obtained by blowing carbon dioxide gas into the clarified primary raw material liquid to dissolve the carbon dioxide gas to have a gas volume of 2.9.

### <Sensory evaluation>

A sensory evaluation of the produced non-fermented beer-like effervescent beverage was carried out by three beer expert panelists who evaluated the body, the tightness of aftertaste, and the comprehensive evaluation with scores of 1 to 4. The evaluation criteria were as follows.

### (Body)

1 point: No body.
2 points: Slightly light bodied.
3 points: Medium bodied.
4 points: Full bodied.

### (Aftertaste tightness)

1 point: There is no aftertaste tightness.
2 points: There is only slight aftertaste tightness
3 points: There is a tight aftertaste.
4 points: There is a very tight aftertaste.

### (Comprehensive evaluation)

1 point: The flavor balance is poor as a beer-flavored beverage.
2 points: The flavor balance is somewhat poor as a beer-flavored beverage.
3 points: The flavor balance is good as a beer-flavored beverage.
4 points: The flavor balance is very good as a beer-flavored beverage.

An average score of evaluations by all the panelists of less than 1.5 points was evaluated as ×, 1.5 points or more and less than 2.5 points as Δ, 2.5 points or more and less than 3.5 points as ○, and 3.5 points or more as ⊚.

The type and added amount (g/L) of sweet substance, the content of iso-a acid (g/L), and the results of sensory evaluation of each non-fermented beer-like effervescent beverage are shown in Tables 2 and 3 together with the digestible-carbohydrate content (g / 100 mL) and the purine concentration (mg / 100 mL).

**[Table 2]**

| | Base beverage | Ex. 1-1 | Comp. Ex. 1-2 | Comp. Ex. 1-3 | Comp. Ex. 1-4 |
|---|---|---|---|---|---|
| Sweet substance (added amount [g/L]) | None | Enzyme-treated stevia (0.028) | Licorice extract (0.025) | Luo han guo extract (0.017) | Thaumatin (0.15) |
| Iso-α acid [g/L] | 0.02 | 0.02 | 0.02 | 0.02 | 0.02 |
| Digestible-carbohydrate [g / 100 mL] | 0.3 | 0.3 | 0.3 | 0.3 | 0.3 |
| Purine [mg / 100 mL] | 0.0 | 0.0 | 0.0 | 0.0 | 0.0 |
| Body | × | ⊚ | ○ | ○ | Δ |
| Tightness of aftertaste | Δ | ⊚ | × | Δ | × |
| Comprehensive evaluation | × | ⊚ | Δ | Δ | × |
| Comment | Sour taste, Watery, Poorly balanced | Bodied, Well balanced | Clings to the tongue, No tightness | Remains sticky in the mouth, Weak tightness | Sweet taste comes after better taste, Sense of discomfort |

**[Table 3]**

| | Comp. Ex. 1-5 | Comp. Ex. 1-6 | Comp. Ex. 1-7 | Comp. Ex. 1-8 |
|---|---|---|---|---|
| Sweet substance (added amount [g/L]) | Glucose (7.7: solid content) | Maltose (12.5: solid content) | Fructose glucose (5.9: solid content) | Erythritol (6.7) |
| Iso-α acid [g/L] | 0.02 | 0.02 | 0.02 | 0.02 |
| Digestible-carbohydrate [g / 100 mL] | 1.1 | 1.6 | 0.9 | 1.0 |
| Purine [mg / 100 mL] | 0.0 | 0.0 | 0.0 | 0.0 |
| Body | ⊚ | ⊚ | ⊚ | ○ |
| Tightness of aftertaste | ○ | ⊚ | ⊚ | ○ |
| Comprehensive evaluation | ⊚ | ⊚ | ⊚ | ○ |
| Comment | Bodied, Well balanced | Bodied, Well balanced | Bodied, Well balanced | Faint, Refreshing |

The base beverage containing no sweet substance was a beverage of poor balance with a weak beer-like body and poor aftertaste tightness. On the other hand, the beverages of Comparative Examples 1-2, 1-3, and 1-4 in which a licorice extract, a luo han guo extract, or thaumatin was blended as a sweet substances so as to have a content in sucrose equivalent of 5 g/L were inferior in the tightness of aftertaste. Comparative Examples 1-5, 1-6, 1-7, and 1-8 in which glucose, maltose, or fructose glucose was blended as a sweet substance so as to have a content in sucrose equivalent of 5 g/L had high digestible-carbohydrate contents. On the other hand, the beverage of Example 1-1 in which the enzyme-treated stevia was blended as a sweet substance had a low digestible-carbohydrate content, a satisfactory body and tightness of aftertaste, and a satisfactory balance of beer-like taste.

### [Examples 2-1 to 2-7]

Non-fermented beer-like effervescent beverages were produced by blending the enzyme-treated stevia and iso-a acid with the same base beverage as in Example 1-1, so that the final concentrations of the beverages were as shown in Tables 4 and 5, and the sensory evaluation was performed in the same manner as in Example 1-1. The raw materials such as the enzyme-treated stevia and the hop extract were all the same as in Example 1-1. The content of enzyme-treated stevia (g/L), the content of iso-a acid (g/L), and the results of sensory evaluation of each non-fermented beer-like effervescent beverage are shown in Tables 4 and 5, together with the digestible-carbohydrate content (g/ 100 mL).

**[Table 4]**

| | Base beverage | Ex. 2-1 | Ex. 2-2 | Ex. 2-3 |
|---|---|---|---|---|
| Enzyme-treated stevia [g/L] (Sucrose equivalent content [g/L]) | 0 (0) | 0.005 (0.9) | 0.01 (1.8) | 0.02 (3.6) |
| Iso-α acid [g/L] | 0.02 | 0.02 | 0.02 | 0.02 |
| Digestible-carbohydrate [g / 100 mL] | 0.3 | 0.3 | 0.3 | 0.3 |
| Body | × | Δ | ○ | ⊚ |
| Tightness of aftertaste | Δ | Δ | ○ | ⊚ |
| Comprehensive evaluation | × | Δ | ○ | ⊚ |
| Comment | Sour taste, Watery, Poorly balanced | Sour taste, Poorly balanced | Slight sour taste, Tight aftertaste | Bodied, Well balanced |

**[Table 5]**

| | Ex. 2-4 | Ex. 2-5 | Ex. 2-6 | Ex. 2-7 |
|---|---|---|---|---|
| Enzyme-treated stevia [g/L] (Sucrose equivalent content [g/L]) | 0.04 (7.2) | 0.08 (14.4) | 0.1 (18.0) | 0.16 (28.8) |
| Iso-α acid [g/L] | 0.02 | 0.02 | 0.02 | 0.02 |
| Digestible-carbohydrate [g / 100 mL] | 0.3 | 0.3 | 0.3 | 0.3 |
| Body | ⊚ | ⊚ | ⊚ | ⊚ |
| Tightness of aftertaste | ⊚ | ○ | Δ | × |
| Comprehensive evaluation | ⊚ | ○ | Δ | × |
| Comment | Bodied, Well balanced | Bodied, Slight sweet taste | Astringent taste, Sweet taste, Aftertaste remains | Astringent taste, Strong sweet taste, Aftertaste remains |

As a result, the body was improved in a manner dependent on the added amount of enzyme-treated stevia. In addition, the tightness of aftertaste of the beverage was satisfactory in the beverages of Examples 2-2 to 2-5 in which the added amounts of the enzyme-treated stevia were from 0.01 to 0.08 g/L (from 1.8 to 14.4 g/L in sucrose equivalent), and in particular, both the aftertaste tightness and the body were highly satisfactory in the beverages of Examples 2-3 and 2-4 in which the added amounts were from 0.02 to 0.04 g/L (from 3.6 to 7.2 g/L in sucrose equivalent).

### [Examples 3-3 to 3-7, Comparative examples 3-1, 3-2, 3-8]

Non-fermented beer-like effervescent beverages were produced by blending the enzyme-treated stevia and iso-a acid with the same base beverage as in Example 1-1, so that the final concentrations of the beverages were as shown in Tables 6 and 7, and the sensory evaluation was performed in the same manner as in Example 1-1. The raw materials such as the enzyme-treated stevia and the hop extract were all the same as in Example 1-1. The content of enzyme-treated stevia (g/L), the content of iso-a acid (g/L), and the results of sensory evaluation of each non-fermented beer-like effervescent beverage are shown in Tables 6 and 7, together with the digestible-carbohydrate content (g/ 100 mL).

**[Table 6]**

| | Comp. Ex. 3-1 | Comp. Ex. 3-2 | Ex. 3-3 | Ex. 3-4 |
|---|---|---|---|---|
| Enzyme-treated stevia [g/L] | 0.03 | 0.03 | 0.03 | 0.03 |
| Iso-α acid [g/L] | 0.00 | 0.005 | 0.01 | 0.015 |
| Digestible-carbohydrate [g / 100 mL] | 0.3 | 0.3 | 0.3 | 0.3 |
| Body | × | Δ | ○ | ○ |
| Tightness of aftertaste | × | Δ | ○ | ⊚ |
| Comprehensive evaluation | × | Δ | ○ | ⊚ |
| Comment | Watery, Astringent taste, Poorly balanced | Watery, Astringent taste, Poorly balanced | Slightly watery, Slight astringent taste | Refreshing, Well balanced |

**[Table 7]**

| | Ex. 3-5 | Ex. 3-6 | Ex. 3-7 | Comp. Ex. 3-8 |
|---|---|---|---|---|
| Enzyme-treated stevia [g/L] | 0.03 | 0.03 | 0.03 | 0.03 |
| Iso-α acid [g/L] | 0.02 | 0.025 | 0.03 | 0.035 |
| Digestible-carbohydrate [g / 100 mL] | 0.3 | 0.3 | 0.3 | 0.3 |
| Body | ⊚ | ⊚ | ⊚ | ⊚ |
| Tightness of aftertaste | ⊚ | ⊚ | Δ | × |
| Comprehensive evaluation | ⊚ | ⊚ | ○ | Δ |
| Comment | Bodied, Well balanced | Bodied, Well balanced | Bodied, Slightly bitter aftertaste remains | Aftertaste remains, Harsh taste |

As a result, when the added amount of iso-a acid was 0.01 g/L or more, the body was improved. In addition, the tightness of aftertaste was improved when the added amount of iso-a acid was from 0.01 to 0.025 g/L, and the tightness of aftertaste was excellent when the added amount of iso-a acid was from 0.015 to 0.025 g/L. In particular, when the added amount of iso-a acid was from 0.01 to 0.03 g/L, the beer-like palatability was obtained.

### [Examples 4-1 to 4-9]

Non-fermented beer-like effervescent beverage were produced using various types of hops and the like as raw materials containing an iso-a acid, and the body and the aftertaste tightness thereof were evaluated. As raw materials containing an iso-a acid, a hop extract of the hop variety Herkules used in Example 1-1 and the like (product name: "CO₂ Hop Extract", manufactured by Barth-Haas Group) ("Hop A" in the table), a hop extract of the hop variety Nugget (product name: "CO₂ Hop Extract") ("Hop B" in the table), a hop pellet of the hop variety Herkules ("Hop C" in the table), a hop pellet of the hop variety Nugget ("Hop D" in the table), a hop pellet of the hop variety Saphir ("Hop E" in the table), a hop pellet of the hop variety Saaz ("Hop F" in the table), a hop pellet of the hop variety Styrian Golding ("Hop G" in the table), a hop pellet of the hop variety Pelre ("Hop H" in the table), and an isomerized hop extract ("Hop I" in the table) were used.

More specifically, non-fermented beer-like effervescent beverages were produced by blending the enzyme-treated stevia and a raw material containing an iso-a acid with the same base beverage as in Example 1-1, so that the final concentrations of the beverages were as shown in Tables 8 and 9, and the sensory evaluation was performed in the same manner as in Example 1-1. The enzyme-treated stevia was the same as in Example 1-1. The content of enzyme-treated stevia (g/L), the content of iso-α acid (g/L), the digestible-carbohydrate content (g / 100 mL) and the results of sensory evaluation of each non-fermented beer-like effervescent beverage are shown in Tables 8 and 9 together with the ratio of the content of isocohumulone with respect to the content of iso-a acid (hereinafter, referred to as "isocohumulone ratio" ((% by mass)), the ratio of the content of iso-normal-humulone with respect to the content of iso-a acid (hereinafter, referred to as "iso-normal-humulone ratio" (% by mass) and the ratio of the content of isoadhumulone with respect to the content of iso-a acid (hereinafter, referred to as "isoadhumulone ratio" (% by mass)). In the tables, the numerical values in parentheses after the rating are the average scores of evaluations by the panelists.

**[Table 8]**

| Examples | 4-1 | 4-2 | 4-3 | 4-4 | 4-5 |
|---|---|---|---|---|---|
| Enzyme-treated stevia [g/L] | 0.03 | 0.03 | 0.03 | 0.03 | 0.03 |
| Hop type | A | B | C | D | E |
| Iso-α acid [g/L] | 0.02 | 0.02 | 0.02 | 0.02 | 0.02 |
| Isocohumulone ratio [%] | 37.3 | 24.8 | 38.0 | 24.7 | 13.7 |
| Iso-normal-humulone ratio [%] | 51.7 | 61.4 | 50.5 | 61.0 | 75.6 |
| Isoadhumulone ratio [%] | 11.0 | 13.8 | 11.5 | 14.3 | 10.7 |
| Digestible-carbohydrate [g / 100 mL] | 0.3 | 0.3 | 0.3 | 0.3 | 0.3 |
| Body | ⊚ (5.0) | ⊚ (5.0) | ⊚ (5.0) | ⊚ (5.0) | ⊚ (5.0) |
| Tightness of aftertaste | ⊚ (5.0) | ○(4.3) | ⊚ (5.0) | ○(4.3) | ○(4.0) |
| Comprehensive evaluation | ⊚ (5.0) | ○(4.3) | ⊚ (5.0) | ○(4.3) | ○(4.0) |
| Comment | Satisfactory aftertaste, Well balanced | Bitter taste slightly lingers | Satisfactory aftertaste, Well balanced | Bitter taste slightly lingers | Bitter taste slightly lingers, Slightly poor balance |

**[Table 9]**

| Examples | 4-6 | 4-7 | 4-8 | 4-9 |
|---|---|---|---|---|
| Enzyme-treated stevia [g/L] | 0.03 | 0.03 | 0.03 | 0.03 |
| Hop type | F | G | H | I |
| Iso-α acid [g/L] | 0.02 | 0.02 | 0.02 | 0.02 |
| Isocohumulone ratio [%] | 23.8 | 26.4 | 31.9 | 31.0 |
| Iso-normal-humulone ratio [%] | 62.6 | 56.9 | 53.0 | 56.0 |
| Isoadhumulone ratio [%] | 13.6 | 16.7 | 15.1 | 13.0 |
| Digestible-carbohydrate [g / 100 mL] | 0.3 | 0.3 | 0.3 | 0.3 |
| Body | ⊚ (5.0) | ⊚ (5.0) | ⊚ (5.0) | ⊚(5.0) |
| Tightness of aftertaste | ○(4.3) | ⊚ (4.7) | ⊚ (5.0) | ⊚ (5.0) |
| Comprehensive evaluation | ○(4.3) | ⊚ (4.7) | ⊚ (5.0) | ⊚ (5.0) |
| Comment | Bitter taste slightly lingers | Well balanced | Satisfactory aftertaste, Well balanced | Satisfactory aftertaste, Well balanced |

As a result, regardless of the type of the raw material containing an iso-a acid (hop pellet, hop extract, isomerized hop extract) and the variety of the raw material hop, by inclusion of the iso-a acid and the enzyme-treated stevia, it was possible to produce a non-fermented beer-like effervescent beverage with a satisfactory body and aftertaste tightness. Above all, the aftertaste tightness and the comprehensive evaluation showed an extremely high positive correlation of 0.93 with the added isocohumulone ratio, and showed an extremely high negative correlation of -0.92 with the iso-normal-humulone ratio. No correlation of 0.00 was found with the isoadhumulone ratio. In particular, in Examples 4-1, 4-3, and 4-7 to 4-9 in which the isocohumulone ratio was 26% by mass or more and the iso-normal-humulone ratio was 57% by mass or less, the aftertaste tightness and the comprehensive evaluation were highly satisfactory. In these examples in which the overall sensory evaluations were satisfactory, the balance between the astringent taste and the bitter taste of stevia was favorable, and there was a firm tightness in the aftertaste, and the aftertaste remaining in the mouth afterwards (sweet taste, bitter taste, astringent taste and the like) was not noticeable.

### [Example 5]

Furthermore, a plurality of hops was used to produce a non-fermented beer-like effervescent beverage, and the body and the aftertaste tightness thereof were evaluated. As a raw material containing an iso-a acid, a combination of a hop pellet of the hop variety Herkules and a hop pellet of the hop variety Saphir was used.

More specifically, non-fermented beer-like effervescent beverages were produced by blending the enzyme-treated stevia and raw materials containing an iso-a acid with the same base beverage as in Example 1-1, so that the final concentrations of the beverages were as shown in Tables 10 and 11, and the sensory evaluation was performed in the same manner as in Example 1-1. The enzyme-treated stevia was the same as in Example 1-1. The content of enzyme-treated stevia (g/L), the content of iso-α acid (g/L), the digestible-carbohydrate content (g / 100 mL) and the results of sensory evaluation of each non-fermented beer-like effervescent beverage are shown in Tables 10 and 11 together with each of the isocohumulone ratio (% by mass), the iso-normal-humulone ratio (% by mass) and the isoadhumulone ratio (% by mass). In the tables, the numerical values in parentheses after the rating are the average scores of evaluations by the panelists.

**[Table 10]**

| Examples | 5-1 | 5-2 | 5-3 | 5-4 | 5-5 |
|---|---|---|---|---|---|
| Enzyme-treated stevia [g/L] | 0.03 | 0.03 | 0.03 | 0.03 | 0.03 |
| Iso-α acid [g/L] | 0.02 | 0.02 | 0.02 | 0.02 | 0.02 |
| Isocohumulone ratio [%] | 16.2 | 21.7 | 24.8 | 26.3 | 29.5 |
| Iso-normal-humulone ratio [%] | 73.0 | 67.4 | 64.2 | 62.6 | 59.3 |
| Isoadhumulone ratio [%] | 10.8 | 11.0 | 11.1 | 11.1 | 11.2 |
| Digestible-carbohydrate [g / 100 mL] | 0.3 | 0.3 | 0.3 | 0.3 | 0.3 |
| Body | ⊚ (5.0) | ⊚ (5.0) | ⊚ (5.0) | ⊚ (5.0) | ⊚ (5.0) |
| Tightness of aftertaste | ○(4.0) | ○(4.3) | ○(4.3) | ⊚ (4.7) | ⊚ (4.7) |
| Comprehensive evaluation | ○(4.0) | ○(4.3) | ○(4.3) | ⊚ (4.7) | ⊚ (4.7) |

**[Table 11]**

| Examples | 5-6 | 5-7 |
|---|---|---|
| Enzyme-treated stevia [g/L] | 0.03 | 0.03 |
| Iso-α acid [g/L] | 0.02 | 0.02 |
| Isocohumulone ratio [%] | 32.9 | 37.5 |
| Iso-normal-humulone ratio [%] | 55.8 | 51.0 |
| Isoadhumulone ratio [%] | 11.3 | 11.5 |
| Digestible-carbohydrate [g / 100 mL] | 0.3 | 0.3 |
| Body | ⊚ (5.0) | ⊚ (5.0) |
| Tightness of aftertaste | ⊚ (5.0) | ⊚ (5.0) |
| Comprehensive evaluation | ⊚ (5.0) | ⊚ (5.0) |

As a result, in particular, in Examples 5-4 to 5-7 in which the isocohumulone ratio was 26% by mass or more and the iso-normal-humulone ratio was 63% by mass or less, the tightness of aftertaste and the comprehensive evaluation were highly satisfactory. In these samples in which the overall sensory evaluations were satisfactory, the balance between the astringent taste and the bitter taste of stevia was favorable, and there was a firm tightness in the aftertaste, and the aftertaste remaining in the mouth afterwards (sweet taste, bitter taste, astringent taste and the like) was not noticeable.

### INDUSTRIAL APPLICABILITY

According to the present invention, it is possible to provide a non-fermented beer-like effervescent beverage having both a satisfactory body and tightness of aftertaste with a reduced digestible-carbohydrate content.

## Claims

1. A non-fermented beer-like effervescent beverage comprising a steviol glycoside and 0.01 to 0.03 g/L of an iso-a acid.

2. The non-fermented beer-like effervescent beverage according to Claim 1, wherein a digestible-carbohydrate content is less than 2.0 g / 100 mL.

3. The non-fermented beer-like effervescent beverage according to Claim 1, wherein a digestible-carbohydrate content is less than 0.9 g / 100 mL.

4. The non-fermented beer-like effervescent beverage according to Claim 1, wherein a digestible-carbohydrate content is less than 0.5 g /100 mL.

5. The non-fermented beer-like effervescent beverage according to any one of Claims 1 to 4, wherein a content of steviol glycoside is from 0.01 to 0.08 g/L.

6. The non-fermented beer-like effervescent beverage according to any one of Claims 1 to 4, wherein a content of steviol glycoside is from 1 to 15 g/L in sucrose equivalent.

7. The non-fermented beer-like effervescent beverage according to any one of Claims 1 to 6,
wherein a ratio of a content of isocohumulone with respect to a content of iso-a acid is 26% by mass or more, and a ratio of a content of iso-normal-humulone with respect to the content of iso-a acid is 63% by mass or less.

8. The non-fermented beer-like effervescent beverage according to any one of Claims 1 to 7, wherein the steviol glycoside is at least one selected from the group consisting of stevioside, rebaudioside A, and glycosyltransferase-treated products thereof.

9. The non-fermented beer-like effervescent beverage according to any one of Claims 1 to 8, which does not contain an alcohol.

10. The non-fermented beer-like effervescent beverage according to any one of Claims 1 to 9, which comprises a water-soluble dietary fiber.

11. The non-fermented beer-like effervescent beverage according to any one of Claims 1 to 10, wherein a purine concentration is 0.2 mg / 100 mL or less.

12. A method for producing a non-fermented beer-like effervescent beverage,
the method comprising using a steviol glycoside as a raw material and
adjusting an iso-a acid content in the non-fermented beer-like effervescent beverage to 0.01 to 0.03 g/L.

13. The method for producing a non-fermented beer-like effervescent beverage according to Claim 12,
wherein a ratio of a content of isocohumulone with respect to a content of iso-a acid in the non-fermented beer-like effervescent beverage is adjusted to be 26% by mass or more, and
a ratio of a content of iso-normal-humulone with respect to the content of iso-a acid is adjusted to be 63% by mass or less.
